(19) Europäisches Patentamt
European Patent Office
Office européen des brevets

(11) **EP 4 451 165 A1**

(12) **EUROPEAN PATENT APPLICATION**

(43) Date of publication:
**23.10.2024  Bulletin 2024/43**

(21) Application number: **23382370.7**

(22) Date of filing: **21.04.2023**

(51) International Patent Classification (IPC):
**G06F 30/20** (2020.01)     **G06F 111/10** (2020.01)
**G06F 113/14** (2020.01)     **G06F 119/08** (2020.01)

(52) Cooperative Patent Classification (CPC):
**G06F 30/20;** G06F 2111/10; G06F 2113/14;
G06F 2119/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Airbus Operations, S.L.U.
28906 Getafe (Madrid) (ES)**

(72) Inventors:
• **PASCUAL PASCUAL, Juan Pablo
  28906 Getafe, Madrid (ES)**
• **SINGH, Umesh Kumar
  28906 Getafe, Madrid (ES)**

(74) Representative: **ABG Intellectual Property Law,
S.L.
Avenida de Burgos, 16D
Edificio Euromor
28036 Madrid (ES)**

(54)   **COMPUTER-IMPLEMENTED METHOD FOR THE NUMERICAL SIMULATION OF A HEAT EXCHANGER**

(57)   The present invention is related to a computer-implemented method for the numerical simulation of a heat exchanger. The invention is characterized by the use of a numerical model comprising a plurality of elemental volumes such that they all correspond to the same configuration such that the joint of all the elemental volumes reproduces the volume in which heat transfer occurs between a first fluid and a second fluid, the hot fluid and the cold fluid respectively. The simulation method establishes an iterative method on the set of elemental volumes in such a way that the relevant variables of each volume are updated using the data provided by the interpolation module without the need to run a classical simulation on the flow. The result is the assessment of the variables of interest in the entire volume of the heat exchanger for predetermined operating conditions without the need to carry out a complete simulation of the entire volume of the heat exchanger and at the scales that such a simulation would require.

FIG. 1

EP 4 451 165 A1

**Description**

**FIELD OF THE INVENTION**

The present invention is related to a computer-implemented method for the numerical simulation of a heat exchanger.

The invention is characterized by the use of a numerical model comprising a plurality of elemental volumes such that they all correspond to the same configuration such that the joint of all the elemental volumes reproduces the volume in which heat transfer occurs between a first fluid and a second fluid, the hot fluid and the cold fluid respectively.

Before simulating the behavior of the heat exchanger, multiple CFD (Computational Fluid Dynamics) simulations are carried out on a reference volume which also has the configuration of the elemental volumes. These multiple simulations are carried out under different flow conditions in such a way as to sample the entire possible space of input variables and determine the variables of interest in that volume. This set of simulations, making use of interpolation techniques, allows determining the behavior of an elemental volume at any input condition without having to rerun a CFD simulation on the elemental volume as this is computationally expensive.

The simulation method establishes an iterative method on the set of elemental volumes in such a way that the relevant variables of each volume are updated using the data provided by the interpolation module without the need to run a classical simulation on the flow. In this simulation it is taken into account that the outflow of any of the flows through one of the boundaries of an elemental volume is the inflow of the adjacent elemental volume at the common boundary.

The result is the assessment of the variables of interest in the entire volume of the heat exchanger for predetermined operating conditions without the need to carry out a complete simulation of the entire volume of the heat exchanger and at the scales that such a simulation would require.

**PRIOR ART**

One of the most important areas of technological development is that of heat exchanging.

Increasingly stringent regulations in all aspects that have an environmental impact have forced internal combustion engines or turbines also based on the combustion of a certain hydrocarbon to work at higher temperatures in order to be more efficient.

Exhaust gases carry heat that in many applications must be transferred to another fluid in increasingly smaller spaces. This is the case of coolers, extraction stages in generation processes transferring heat to fluids that are subsequently turbined, or extraction stages feeding a Rankine cycle.

Another case and in the context of the invention, one of the most demanding applications is found in the engine bleed heat exchanger wherein the source of the hot fluid is a high stage compressor of the turbo-engine and which is intended to provide air at a temperature suitable to provide an atmosphere that can be introduced into the cabin where the passengers and crew are located.

This heat exchanger is located in a place where space is very limited and the temperature of the hot air can be even higher than 500ºC, which is cooled down to 200ºC using cold fan air. The cooled bleed air is supplied to cabin packs and the Wing Anti ICE system, just to name a few applications.

These requirements demand that heat transfer is carried out in very small volumes and therefore with very efficient transfer mechanisms.

Increasing heat transfer efficiency involves the use of various configurations of dissipative fins with complex and sinuous shapes to increase the density of heat exchange surface area relative to volume.

While this is possible, given a design, determining its actual efficiency and performance has two alternatives. A first alternative is to build a physical prototype to assess its behavior under operating conditions. The construction of a prototype for each test in a design evolution process currently makes this alternative unfeasible both in terms of cost and time.

Currently, this type of design is assessed using computational techniques, in particular CFD techniques, to simulate the behavior of each prototype, accelerating the design process since the prototype replaces the physical entity that is simulated when the code validation process has been passed.

Examples of CDF computational calculation techniques are finite element methods, finite volume methods, finite difference techniques or even spectral methods.

However, even this second alternative has its limits. The very high requirements identified above cause the geometries to consist of very complex and small volumes and conduits through which the two fluids circulate in a very high Reynolds regime.

A correct simulation of these conditions imposes discretizations with very dense meshes and with a very high number of nodes, for example using the finite element method or the finite volume method.

Since the Reynolds numbers are also very high, the turbulent regime establishes a very different range of scales to be solved, which forces the use of very complex turbulence models or even finer discretization meshes.

To give an example, a typical heat exchanger case under current operating conditions may even require simulations that require a year and a half of computation with very powerful computers. Under these conditions simulation is also not feasible.

The usual techniques to reduce the computational cost are based on mesh refinement techniques where the highest density of nodes is concentrated for example where gradients or variations of certain variables are more relevant.

This same technique allows that those areas where these strong variations do not exist, the density of nodes is lower and also the computational cost.

However, when a complicated geometry is complicated throughout the volume, as in this case, in order to promote the highest possible heat transfer throughout the volume, the mesh refinement techniques do not work to free areas with few variations, since the strong variations are present throughout the entire domain.

There are also convergence acceleration techniques for solving numerical problems arising from a given discretization. An example is the multigrid techniques. However, while solvers greatly accelerate convergence, these techniques require maintaining the data structures associated with finer meshes and, in addition, including a plurality of increasingly coarse meshes to solve the errors associated with long scales.

The object of this invention is a computational method that changes the way in which the data structures representing the relevant variables that determine the behavior of the heat exchanger are constructed and also changes the mode of resolution. In particular, the proposed method does not require to build a fine discretization of the whole domain, and therefore two computational resources are greatly reduced, the amount of memory and the CPU time.

## DESCRIPTION OF THE INVENTION

A first aspect of the invention is a computer-implemented method for the numerical simulation of a heat exchanger. In particular, this aspect of the invention is very useful for determining the thermal variables of a bleed heat exchanger of an airplane wherein the specifications are very demanding.

The inlet of a hot stream coming from a high pressure stage or intermediate stage of the compressor of a turbo engine of an aircraft are at very high temperatures, even around 600 degrees Celsius in the outlet conduits. In contrast, the outside air when the aircraft is flying at cruising altitude can reach minus 60 degrees Celsius or even lower.

There is a need to cold down the inlet hot air temperature to distribute this air with adapted temperature to different parts of the cabin without the need for heating air taken directly from atmosphere.

The heat exchange must take place in a very small space, so the inner structure of the heat exchanger must be very efficient. Highly efficient structures include a very high number of channels and separation surfaces between the hot fluid and the cold fluid, so that simulation with standard computational fluid dynamics (CFD) techniques requires very fine meshes. Very fine meshes place a very high demand on computational resources, in particular memory but also computational time. It is estimated that a sufficiently fine discretization for an exchanger such as the one specifically described could currently require, on a powerful computer, around two years of computational time. Totally unaffordable time.

On the contrary, according to the first aspect of the invention, the method proposed requires very few computational resources since the storage requirements are much less and, above all, the calculation time is enormously less, being able to carry out a simulation of the same exchanger with a calculation time of the order of hours with a similar accuracy.

The input data to the simulation method, according to an example, come from measurements in real conditions of the hot gas flow coming from the compressor and the cold air flow coming from the atmosphere so that the simulation provides the most relevant values at the heat exchanger outlet. For example, the most useful parameters are pressure drop, outlet temperatures and mass flow rates. These parameters can in turn serve as input for actuators that establish a certain behavior of other devices as a function of the output variables.

According to another example, the output variables are used for modifying the design of the heat exchanger by adapting the specifications to the required specifications.

In particular:

- *the heat exchanger is configured to exchange heat between a first fluid and a second fluid, the first fluid being a hot fluid and the second fluid being a cold fluid;*
- *the heat exchanger comprising a first input port and a first output port for the first fluid and, a second input port and a second output port for the second fluid;*
- *the heat exchanger comprising a heat exchange volume comprising heat exchanging walls separating the first fluid and the second fluid and for exchanging heat between the two fluids.*

The heat exchanger therefore has an inlet port and an outlet port for the first fluid, and also has an inlet port and an outlet port for the second fluid. Both fluids do not enter into contact inside the heat exchanger but are always separated by a heat exchange wall.

According to a preferred example the flows of the first fluid and the second fluid are transverse.

Similarly, incoming flows are, according to the prior art, usually divided into several channels in an inlet manifold located close to the inlet port, the channels preferably distributed by layers or levels. At the outlet, the channels converge again in a common space of an outlet manifold for the first fluid and in a common space of an outlet manifold for the second fluid.

Inside the heat exchanger, the entire volume containing chambers or channels for the passage of the first fluid, chambers or channels for the passage of the second fluid and, separation surfaces for both spaces through which heat is transferred from the hot fluid to the cold fluid, is the volume to be identified as the exchange volume.

*The whole behavior of the heat exchanger is simulated according to the following steps:*

- *generating a numerical model according to the following steps:*
- *discretizing the heat exchange volume in elemental volumes, wherein each elemental volume comprises:*

    *a first inlet boundary region and a first outlet boundary region for the first fluid;*
    *a second inlet boundary region and a second outlet boundary region for the second fluid;*
    *at least a portion of the heat exchanging wall separating the first fluid and the second fluid;*

    *wherein the portion of the heat exchanging wall and the inlet and outlet boundary regions of all elemental volumes have the same configuration and shape;*
    *wherein the discretization is such that the union of elemental volumes is the heat exchange volume and the union of portions of the heat exchanging wall is the heat exchanging wall of the heat exchanger.*

This is a specific form of discretization of the exchange volume into what has been called elemental volumes. All elemental volumes have the same shape, containing a space for the passage of the first fluid, a space for the passage of the second fluid and a heat exchange wall between the first fluid and the second fluid. Likewise, the spaces of each fluid have a corresponding inlet region and a corresponding outlet region through the boundaries of the elemental volume.

The boundaries of each elemental volume are not physical boundaries since each elemental volume is a control volume.

- *allocating a data structure for storing fluid parameters and thermal properties of the heat exchanging wall, for storing at least, of each elemental volume, fluid values for the first fluid and for the second fluid;*
- *populating fluid values corresponding to boundary conditions of the heat exchanger on those inlet/outlet regions of the elemental volumes located at the boundaries of the heat exchange volume.*

This specific discretization allows the storage of a reduced number of variables. According to a preferred example the variables to be stored are the fluid dynamic and thermodynamic variables at the inlet and outlet of each first and second fluid space respectively as well as the temperature of the heat exchange wall portion.

At the beginning, although the necessary resources are foreseen to store all the variables, values are only assigned in those locations that correspond to the flow input, boundary conditions, since it will be the subsequent iterative process that will determine the rest of the values until the output of the first flow and the output of the second flow.

- *instantiating an estimation module for providing the fluid values of the outlet regions of an elemental volume when inputting fluid values of the inlet regions by estimating the results of a numerical simulation of the reference elemental volume.*

The use of elemental volumes that have the same shape makes it possible to create a module that provides an estimate of the output as a function of the input variables since the only parameter/parameters that is modified is the input variables.

The term "instantiating" is used in the sense used for example in object-oriented programming even if the specific way in which it is implemented on a computer does not make use of object-oriented programming techniques. This term should be interpreted as providing the necessary computational resources such as memory for the variables it needs to manipulate or parts of executable code to perform subtasks specific to the function attributed to it so that the module is generated and is in communication with other parts of the computer-implemented program offering the service for which it is programmed.

According to a preferred example, the module is generated using numerical simulations for a large set of input conditions, i.e. for various fluid-dynamic and thermodynamic input conditions to determine, at those conditions, the fluid-dynamic and thermodynamic output conditions. The module, in operational mode, receives any input conditions and provides the fluid dynamic variables at the output by interpolating the values on which the simulation has been carried out.

- *iterating over all the elemental volumes having available values of the inlet regions, at each iteration updating the values of the outlet regions by using the estimation module, iterating until a predetermined norm evaluated over the increments of updated values is below a predetermined threshold value;*
- *returning at least one fluid value of the allocated data structure storing the elemental volumes as the result of the previous iterative step.*

The use of an estimator module makes it possible to avoid simulation within each elemental volume, drastically reducing the computational cost. Since the reduction of the computational cost is carried out in the innermost iterative loop, the one that goes through each of the elemental volumes, the impact on the reduction of the overall computational cost is very high.

The order established in the update of the elemental volumes is not unique, it is sufficient that the elemental volume to be updated has available the fluid-dynamic and thermodynamic values at the input. The estimator module assesses the fluid dynamic and thermodynamic values at the output. Since each elemental volume has another elemental volume, the output or outputs of an elemental volume will be the inputs of the adjacent elemental volume through the surface that establishes the division or separation between one and the other elemental volume.

Once a mathematical norm has been established, a metric is available to assess the corrections with which the values stored in the elemental volumes are being updated. In this way it is possible to measure during the iterative process if the corrections are below a predetermined threshold value to allow to have a stop criterion considering that the convergence of the iterative method has been reached.

The method returns at least one fluid value or thermodynamical value, however, it is of interest to have all the calculated values in order to assess the heat exchanger efficiency and the outflow conditions.

According to an embodiment, *generating a numerical model comprises generating:*

*a first reference volume model, the first reference volume model comprising boundary regions of the first fluid and a portion of a heat exchanging wall for separating a first fluid and a second fluid, and*
*a second reference volume model, the second reference volume model comprising boundary regions of the second fluid and the same portion of a heat exchanging wall for separating a first fluid and a second fluid,*
*wherein*
*the boundary regions of the first reference volume model and the portion of the heat exchanging wall of the first reference volume model have the shape of the volume housing the first fluid and the portion of the heat exchanging wall of any of the elemental volumes and,*
*the boundary regions of the second reference volume model and the portion of the heat exchanging wall of the second reference volume model have the shape of the volume housing the second fluid and the portion of the heat exchanging wall of any of the elemental volumes.*

It has been found that it is computationally more efficient to establish two separate reference models when simulating an elemental volume, a first reference volume model and a second reference volume model. The first reference volume model is the one that takes into account the evolution of the first fluid and incorporates the exchange wall portion of the elemental volume. Of interest during the simulation of this first reference volume model will be the heat transfer of the first fluid to the exchange wall and the fluidic and thermal conditions of the first fluid at the outlet.

The second reference volume model is the one that takes into account the evolution of the second fluid and incorporates the exchange wall portion of the elemental volume. That is, both reference models incorporate the same wall. Simulations carried out on the second reference volume model allow to determine the heat transferred now from the wall to the second fluid as well as the fluidic and thermal conditions of the second fluid at the outlet.

According to this embodiment, it further comprises:

- *sampling a predetermined first multidimensional-domain for fluid variables for the first fluid of the inlet boundaries of the first reference volume model and for heat exchanging wall temperature and, sampling a predetermined second multidimensional-domain for fluid variables for the second fluid of the inlet boundaries of a second reference volume model and for heat exchanging wall temperature;*
- *for each sampled point of the first multidimensional-domain carrying out a numerical fluid simulation of the first reference volume model determining the values of the fluid variables of the first fluid of the outlet boundaries responsive to the inlet fluid values of the inlet boundaries; and,*
*for each sampled point of the second multidimensional-domain carrying out a numerical fluid simulation of the second reference volume model determining the values of the fluid variables of the second fluid at the outlet boundaries*

*responsive to the inlet fluid values of the inlet boundaries.*

According to this embodiment, a multidimensional-domain in a space of all input-relevant variables, the fluid variables at the inlet region of the reference model and the wall temperature, is established for both the first reference volume model and the second reference volume model. It is necessary to qualify that the estimation for the variables corresponding to the output of the first reference volume model result independent according to this example embodiment to the estimation for the variables corresponding to the output of the second reference volume model.

Although when the method has converged to the numerical solution the wall temperature in an elemental volume should be the same for the first reference volume model and for the second reference volume model this is not true during the iterative process. The fact that the estimation for the output variables of both reference volume models is independent allows the convergence between the two models to be established in a single iterative kernel, that of the main method, further reducing the computational cost.

According to this embodiment, it further comprises:

- *instantiating a first interpolation module for providing the fluid values of the outlet region when inputting fluid values of the inlet region of the first reference volume model by interpolating the results of the simulations of the first reference elemental volume model; and,*
- *instantiating a second interpolation module for providing the fluid values of the outlet region when inputting fluid values of the inlet region of the second reference volume model by interpolating the results of the simulations of the second reference elemental volume model.*

Continuing with this example, once each variable of the multidimensional domain has been sampled, a numerical simulation is carried out in both the first reference volume model and the second reference volume model in order to have also the output variables in the set of points of the sampled multidimensional space. On these samples an estimator is established for any input value of the multidimensional space, for example by means of interpolation techniques in a very general form wherein it is interpreted as interpolation techniques also those based on the use of a machine learning apparatus or module trained with the data obtained in the simulation.

According to a more specific embodiment, wherein *the method iterates on an elemental volume, each iteration comprises the following steps:*

- *predetermining an initial value of the temperature of the portion of the heat exchanging wall of the elemental volume, said value preferably selected between the temperature of the inlet region of the first fluid and the temperature of the inlet region of the second fluid;*
- *determining the heat transferred from the first fluid to the portion of the heat exchanging wall;*
- *determining the heat transferred from the portion of the heat exchanging wall to the second fluid;*
- *updating the value of the temperature of the portion of the heat exchanging wall responsive to the difference of the two determined heat quantities.*

By using an estimator that allows to estimate separately the output conditions in the first reference volume model and in the second reference volume model it also allows to calculate separately the heat transferred from the first fluid to the exchange wall and the heat transferred from the wall to the second fluid.

Once the convergence of the method is verified these two quantities are equal but not before convergence because the initially assumed wall temperature is not adequate. Therefore, the method updates the value of the exchange wall temperature in the elemental volume depending on the difference between the two heat quantities.

According to a more specific embodiment, *the initial value of the temperature of the portion of the heat exchanging wall of the elemental volume is* $1/2(T_{in}^h + T_{in}^c)$*, wherein* $T_{in}^h$ *is the temperature of the first fluid of the inlet boundary region and* $T_{in}^c$ *is the temperature of the second fluid of the inlet boundary region.*

The convergence of the method depends on how close the first estimate is to the values that allow starting the iterative process. This specific way of taking the initial value of the temperature of the heat exchange wall portion in an elemental volume has been found to be a good estimator that reduces the subsequent number of iterations.

According to a more specific embodiment, the heat transferred from the first fluid to the portion of the heat exchanging wall and, the heat transferred from the portion of the heat exchanging wall to the second fluid are calculated as:

- $Q_h = \dot{m}_h C_p^h (Ttot_{in}^h - Ttot_{out}^h)$ *and* $Q_c = \dot{m}_c C_p^c (Ttot_{out}^c - Ttot_{in}^c)$ *, being*

- $\dot{m}_h$ and $\dot{m}_c$ the mass flow of the first fluid and the second fluid respectively;

- $C_p^h$ and $C_p^c$ the heat capacity of constant pressure of the first fluid and the second fluid respectively; and,

- Ttot denotes the total temperature of the fluid wherein h, c indexes denotes the first fluid and the second fluid respectively and in, out denotes of the inlet boundary region and the outlet boundary region respectively.

According to a more specific embodiment, the update of the temperature of the portion of the heat exchanging wall is determined according to the following steps: *if $Q_h > Q_c$ the value of the temperature of the portion of the heat exchanging wall is updated incrementing a value e and, if $Q_h < Q_c$ the value of the temperature of the portion of the heat exchanging wall is updated decrementing said value e, wherein e is the ratio between the heat transfer according to the values of the current iteration and, the maximum heat transfer; said ratio being preferably estimated as:*

$$e = \dot{m}_h C_p^h (Ttot_{in}^h - Ttot_{out}^h)/C_{min}(Ttot_{in}^h - Ttot_{out}^c)$$

$$C_{min} = min(\dot{m}_h C_p^h, \dot{m}_c C_p^c)$$
*wherein* .

According to a specific embodiment of any of previous examples, *the inlet conditions of the inlet port at least for the first fluid is homogeneous wherein the iteration over the elemental volumes are extended over a layer of elemental volumes and, the fluid and thermal properties propagated to the rest of the heat exchange volume.*

The homogeneous flow conditions at the inlet, at least for the first fluid, establishes in turn the same conditions for each of the layers that form the heat exchanger, understanding by layers the group of elemental volumes forming a layer of the stack that constitutes the discretization of the heat exchange volume. This allows the calculation of one of the layers and its results to be propagated to the rest of the layers, thus determining the thermal and fluidic conditions of the whole computational domain. These conditions will be identified as stratified conditions.

According to a specific embodiment of any of previous examples, a *set of elemental volumes are shifted in such a way that:*

- *the portion of the heat exchanging wall of each shifted elemental volume is the former boundary of two adjacent elemental volumes;*
- *the region of the shifted elemental volume housing the first fluid and the region of the shifted elemental volume housing the second fluid are those regions being adjacent and housed in the two adjacent non-shifted elemental volumes.*

In particular, according to a preferred embodiment of the previous example, *the iterative method is also executed over the shifted elemental volumes.*

The discretization of the entire heat exchange volume into elemental volumes establishes a discretization of the entire computational domain. However, especially when the flow is not stratified due to complex conditions at the inlet port or the inlet manifold of the first fluid, this discretization only takes into account those heat exchange walls that are entirely within an elemental volume but not on those heat exchange walls that may have located at the boundary between adjacent arranged heat exchange volumes.

In these specific cases, according to this embodiment of the invention, they are generated by displacement of the elemental volumes already generated. The displacement is such that now the displaced or shifted elemental volumes have within them the heat exchange wall that was previously between adjacent elemental volumes.

The iteration carried out on the elemental volumes is also extended to the shifted elemental volumes so that the heat transferred through the walls that were previously at the boundary separating elemental volumes is now taken into account.

When the configuration of an elemental volume is such that the portion of the heat exchange wall is extended according to a plane, this plane separating on one and the other side the space through which the first fluid and the second fluid flow respectively, then the shifted elemental volumes show a similar configuration only that the volume occupied by the first fluid is now occupied by the second fluid and, the volume occupied by the second fluid is now occupied by the first fluid.

There are not always heat exchange walls shaped as a plane between elemental volumes. For example, there are complex ways of separating the first fluid and the second fluid in space, such as those formed by heat exchange fins designed by gyroids that fulfill periodic conditions along the three main directions. In this case also the general method according to the first aspect of the invention applies.

A second aspect of the invention is a computer program product comprising instructions which, when the program is executed by a computer, cause the computer to carry out the steps of the method according to any of previous embodiments.

## DESCRIPTION OF THE DRAWINGS

These and other features and advantages of the invention will be seen more clearly from the following detailed description of a preferred embodiment provided only by way of illustrative and non-limiting example in reference to the attached drawings.

Figure 1    This figure shows a heat exchanger and, schematically an elemental volume used during the simulation. This figure shows the real scale of the elemental volume compared to the size of the heat exchanger.

Figure 2    This figure shows schematically the heat exchanging volume and, over it, an elemental volume that is split into two reference models used for determining the fluid and thermal properties at the outlet of the elemental element.

Figure 3    This figure shows a table of cells wherein each cell represents an elemental volume of an specific layer observed according to a plan view.

## DETAILED DESCRIPTION OF THE INVENTION

As will be appreciated by one skilled in the art, aspects of the present invention may be embodied as a system, method or computer program product.

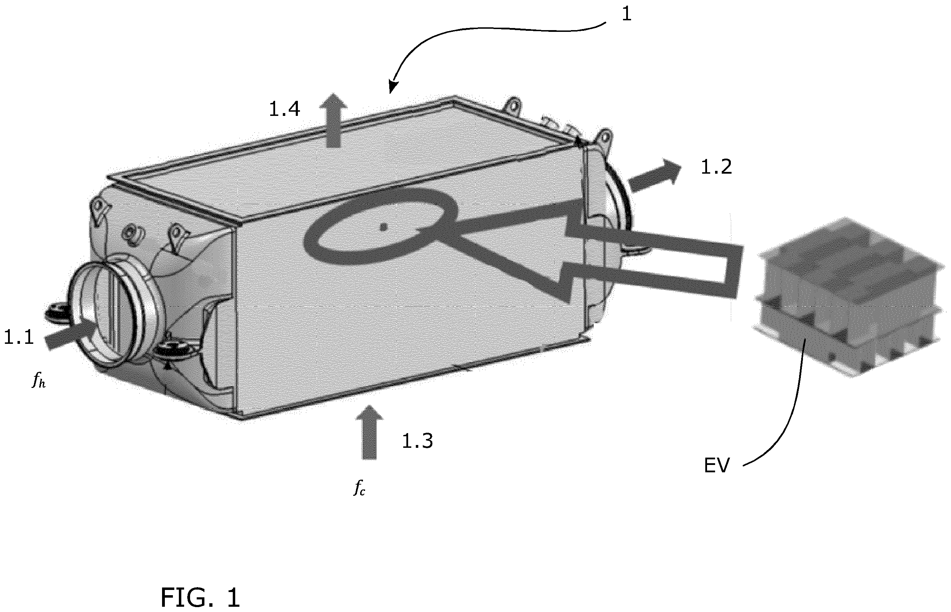

Figure 1 shows a heat exchanger (1), in particular, a bleed heat exchanger (1) which is part of a bleed system in an aircraft. Hot bleed air is coming from compressor high pressure stage and is regulated to required pressure and temperature using valves and the heat exchanger (1) respectively.

The hot air entering the heat exchanger (1) is cooled down to around 200ºC using fan air which is typically in the range of 5ºC to 10ºC. The regulated bleed air is then sent to cabin Packs (used for cabin pressurization and cooling) and other consumers.

Thus, two fluids are distinguished, a first fluid ($f_h$) and a second fluid ($f_c$). The first fluid ($f_h$) is the hot fluid and the second fluid ($f_c$) is the cold fluid. The hot fluid ($f_h$) transfers part of its heat to the cold fluid ($f_c$) through the multiple heat exchange walls (1.6) arranged in the interior of the heat exchanger (1), in particular in the heat exchanging volume (1.5).

This same figure 1 shows an inlet port, identified as first input (1.1) for the first fluid ($f_h$) located on the left side of the figure and an outlet port, identified as first outlet port (1.2) located at the opposite end. The second fluid ($f_c$) enters into a second inlet port (1.3) located on one side and exits through a second outlet port (1.4) on the opposite side giving rise to two cross flows.

The inner structure of the heat exchanger (1), according to this example embodiment, is by stacked layers. Each layer allows the passage of one fluid and another alternately so that between layers there is a heat exchanging wall (1.6). Additionally, to increase heat transfer, within each layer there are fins perpendicular to the heat exchanging walls (1.6) favoring convection exchange.

This layered structure is according to this embodiment example although it is possible to use more complex structures such as generating two sets of conduits, one for the first fluid ($f_h$) and one for the second fluid ($f_c$), where the two sets of conduits are formed by generating a partition wall by means of a gyroid verifying periodicity conditions in the three main directions of space. This partition wall is the heat exchanging wall (1.6) for this other example.

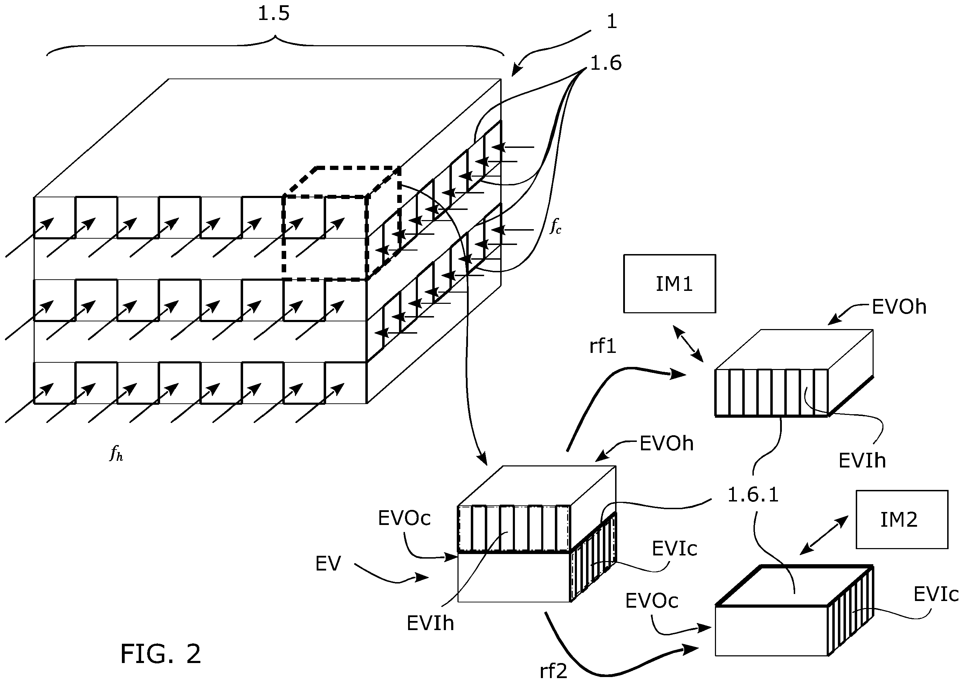

Continuing with the example shown in Figure 1, the heat exchanging volume (1.5) formed by the previously described layers is in the shape of a prism with a rectangular base as shown schematically in Figure 2. In this schematic representation the heat exchanging walls (1.6) are arranged horizontally according to the orientation of the figure separating layers through which the first fluid ($f_h$) and the second fluid ($f_c$) flow alternately can be seen in an enlarged form. Also highlighted with thicker lines are the fins that have a cross section with a square wave configuration.

In this heat exchanger (1), a simulation method will be carried out to determine the overall behavior of the heat exchanger (1) and in particular to determine the flow and thermodynamic conditions at the outlet as a function of the known inlet conditions.

In a first stage, a discretization of the heat exchanging volume (1.5) into a plurality of elemental volumes (EV) is carried out. In Figure 2 only one elemental volume (EV) has been shown, however the entire heat exchanging volume (1.5) has been discretized.

Each of the elemental volumes (EV) has been appropriately chosen wherein each elemental volume (EV) comprises:

a first inlet boundary region (EVIh) and a first outlet boundary region (EVOh) for the first fluid ($f_h$);
a second inlet boundary region (EVIc) and a second outlet boundary region (EVOc) for the second fluid ($f_c$);
at least a portion (1.6.1) of the heat exchanging wall (1.6) separating the first fluid ($f_h$) and the second fluid ($f_c$);

wherein the portion (1.6.1) of the heat exchanging wall (1.6) and the inlet and outlet boundary regions (EVIh, EVOh, EVIc, EVOc) of all elemental volumes (EV) have the same configuration and shape;
wherein the discretization is such that the union of elemental volumes (EV) is the heat exchange volume (1.5) and the union of portions (1.6.1) of the heat exchanging wall (1.6) is the heat exchanging wall (1.6) of the heat exchanger (1).

Even if a heat exchanging wall (1.6) is identified, such heat exchanging wall (1.6) in this case comprises all the plates in the stratified structure.

The central part of Figure 2 shows enlarged and schematically (i.e. it shows more heat exchanging fins than the cube represented in dashed lines identifying the way of discretizing the heat exchanging volume) the elemental volume (EV).

In this embodiment the elemental volume (EV) has in the lower part a space divided by fins and through which flows the second fluid and, in the upper part a space also divided by fins and through which flows the first fluid. Both spaces are separated by a portion of the heat exchanging wall (1.6.1).

In this specific case, inlet conditions allows to solve only a single layer of elemental volumes (EV) and propagating the result to the rest of elemental volumes (EV) by copying the results layer by layer. The single layer of elemental volumes (EV) has a hot layer and a cold layer separated by a heat exchanging wall (1.6).

The elemental volume (EV) is decoupled into a hot and a cold side separately as shown in figure 2, each side generates a reference volume model, a first reference volume model (rf1) for the hot layer comprising the hot layer and the heat exchanging wall (1.6) and, a second reference volume model (rf2) for the cold layer comprising the cold layer and the same heat exchanging wall (1.6).

The fist reference volume model (rf1) has the inlet boundary region (EVIh) and the outlet boundary region (EVOh) of the first fluid ($f_h$). The second reference volume model (rf2) has the inlet boundary region (EVIc) and the outlet boundary region (EVOc) of the second fluid ($f_c$).

In both reference volume models (rf1, rf2), inlet conditions are:

- flow rate ($\dot{m}_h, \dot{m}_c$);

- total pressure $\left(totP_{in}^h, totP_{in}^c\right)$;

- static temperature ($T_{in}^h, T_{in}^c$);

- wall temperature ($T_w$).

From these fluid and thermal variables a CFD simulation provides the output variables:

- static temperature ($T_{out}^h, T_{out}^c$);

- static pressure drop ($dP_h, dP_c$);

- oulet velocity($v_{out}^h, v_{out}^c$).

In this case, four scalars are the input variables generating a four-dimensional domain for the first reference volume model (rf1) and a four-dimensional domain for the second reference volume model (rf2).

Both domains as sampled, for instance generating a partition for each inlet variable. Other sampling methods may be chosen but this case generates a multidimensional grid that may be stored using look-up tables.

For each sample, a CFD simulations provides the output variables at the sampled points of the multidimensional domain. From these set of simulations, it is instantiated

- a first interpolation module (IM1) for providing the fluid values at the outlet region (EVOh) when inputting fluid values at the inlet region (EVIh) of the first reference volume model (rf1) by interpolating the results of the simulations of the first reference elemental volume model (rf1); and,
- a second interpolation module (IM2) for providing the fluid values at the outlet region (EVOc) when inputting fluid values at the inlet region (EVIc) of the second reference volume model (rf2) by interpolating the results of the simulations of the second reference elemental volume model (rf2).

The first and the second interpolation module (IM1, IM2) will be used for determining the fluid values at the outlet region (EVOh. EVOc) with no need of simulating any further volume.

In particular, in this specific example, the first and the second interpolation module (IM1, IM2) are implemented using regressions analysis and provides at the outlet:

- static temperature ( $T_{out}^h, T_{out}^c$ );
- static pressure drop ($dP_h, dP_c$);
- oulet velocity( $v_{out}^h, v_{out}^c$ ).

In particular, these interpolating functions have been implemented in Python.

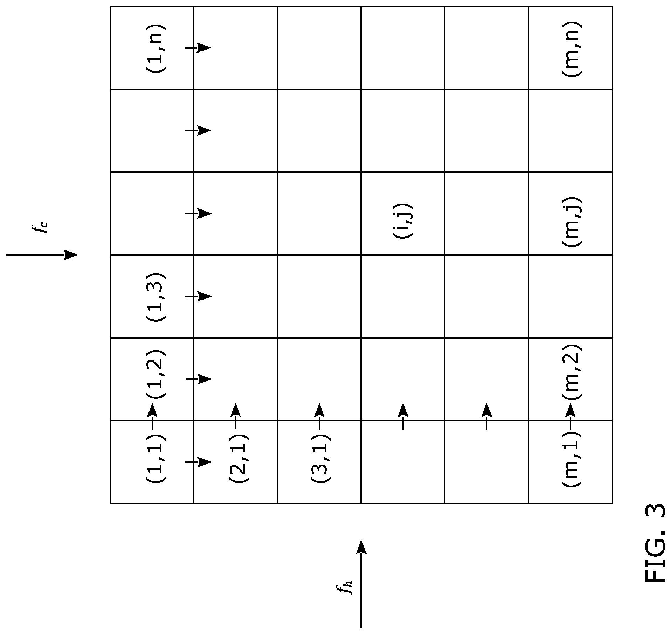

Figure 3 shows the single layer that will be computed with cells schematically representing the elemental volume seen in a direction perpendicular to the heat exchanging wall (1.6).

The method iterates over all the elemental volumes (EV) having available values at the inlet regions, at each iteration updating the values at the outlet regions by using the estimation module, iterating until a predetermined norm evaluated over the increments of updated values is below a predetermined threshold value.

As seen in figure 3, the elemental volume (EV) at the upper left corner is the first one computing column by column (as shown in the table).

At each elemental volume (EV), for instance cell (1,1), the temperature ($T_w$) of the portion of heat exchanging wall (1.6.1) located in the elemental volume (EV) is assumed as is $1/2(T_{in}^h+T_{in}^c)$ , wherein $T_{in}^h$ is the temperature of the first fluid ($f_h$) at the inlet boundary region (EVIh) and $T_{in}^c$ is the temperature of the second fluid ($f_c$) at the inlet boundary region (EVIc).

At a next step, density ( $\rho_{in}^h, \rho_{in}^c$ ) form ambient pressure ($P_{amb}$) and inlet static pressure is calculated since the velocity and the inlet boundary region (EVIh, EVIc) is known from mass flow rate.

$$\rho_{in}^h = \frac{P_{amb} + P_{in}^h}{R \cdot T_{in}^h}$$

$$\rho_{in}^c = \frac{P_{amb} + P_{in}^c}{R \cdot T_{in}^c}$$

where R=287 J/kg K.

The mass flow rate ($\dot{m}_h, \dot{m}_c$) for the first fluid ($f_h$) and the second fluid ($f_c$) respectively is then calculated as:

$$\dot{m}_h = \rho_{in}^h \cdot A_h \cdot v_{in}^h$$

$$\dot{m}_c = \rho_{in}^c \cdot A_h \cdot v_{in}^c$$

wherein $A_h$ and $A_c$ are the trasversal area crossed by the first fluid ($f_h$) and the second fluid ($f_c$) respectively. Inlet velocity is only required as initial guess to calculate total pressure and total temperature from mass flow values known as input boundary conditions.

Now, using predictive values using first and the second interpolation module (IM1, IM2) static temperature at oulet boundary region (EVOh, EVOc) are determined, $T_{out}^h$ and $T_{out}^c$.

Now, iteratively the heat transfer balance at the portion of the heat exchanging wall (1.6.1) is achieved for cell (1.1) by updating the wall temperature $T_w$.

In a first step, total temperature is determined from the static temperature:

$$Ttot_{in}^h = T_{in}^h + \frac{(v_{in}^h)^2}{2 \cdot C_p^h}$$

$$Ttot_{in}^c = T_{in}^c + \frac{(v_{in}^c)^2}{2 \cdot C_p^c}$$

wherein "tot" identification in the temperature variable identifies the total temperature, as previously used indexes $h$, c stand for the hot/cold fluid, that is, the first fluid ($f_h$) and the second fluid ($f_c$), and $C_p$ is the heat capacity at constant pressure.

From these variables, it is calculated the heat transferred from the first fluid ($f_h$) to the portion of the heat exchanging wall (1.6.1), $Q_h$, and the heat transferred from the portion of the heat exchanging wall (1.6.1) to the second fluid ($f_c$), i.e. $Q_c$:

$$Q_h = \dot{m}_h C_p^h (Ttot_{in}^h - Ttot_{out}^h)$$

$$Q_c = \dot{m}_c C_p^c (Ttot_{out}^c - Ttot_{in}^c)$$

wherein as already identified:

- $\dot{m}_h$ and $\dot{m}_c$ the mass flow of the first fluid ($f_h$) and the second fluid ($f_c$) respectively;
- $C_p^h$ and $C_p^c$ the heat capacity at constant pressure of the first fluid ($f_h$) and the second fluid ($f_c$) respectively; and,
- $Ttot$ denotes the total temperature of the fluid wherein $h$, c indexes denotes the first fluid ($f_h$) and the second fluid ($f_c$) respectively and *in, out* denotes at the inlet boundary region and the outlet boundary region respectively.

Since the heat exchanging wall (1.6) does not store heat, and less so under the stationary flow hypothesis, once convergence has occurred the two quantities $Q_h$ and $Q_c$ are equal. However, if convergence has not been reached they are distinct and therefore the difference is non-zero.

The correction during the iterative process is applied on the heat exchanging wall temperature $T_w$ (1.6.1).

In this example embodiment the correction is proportional to the difference and follows the following criterion: if $Q_h > Q_c$ the value of the temperature ($T_w$) of the portion (1.6.1) of the heat exchanging wall (1.6) is updated incrementing a value e and, if $Q_h < Q_c$ the value of the temperature ($T_w$) of the portion (1.6.1) of the heat exchanging wall (1.6) is updated decrementing said value e, wherein e is the ratio between the heat transfer according to the values of the current iteration and, the maximum heat transfer; said ratio being preferably estimated as:

$$e = \dot{m}_h C_p^h (Ttot_{in}^h - Ttot_{out}^h)/C_{min}(Ttot_{in}^h - Ttot_{out}^c)$$

wherein $C_{min} = min(\dot{m}_h C_p^h, \dot{m}_c C_p^c)$.

In a general case $C_p^h$ and $C_p^c$ depend on temperature.

Once the heat balance is achieved for cell (1.1) then $T_{out}^h, T_{out}^c$, $dP_h$, $dPc$ and $v_{out}^h, v_{out}^c$ are predicted using the first and the second interpolation modules (IM1, IM2) at the hot and cold side.

The static pressure at the outlet of the elemental volume (EV) is calculated using the pressure drop at the output:

$$P_{out}^h = P_{in}^h - dP_h$$

$$P_{out}^c = P_{in}^c - dP_c$$

and also the density:

$$\rho_{out}^h = \frac{P_{amb} + P_{out}^h}{R \cdot T_{out}^h}$$

$$\rho_{out}^c = \frac{P_{amb} + P_{out}^c}{R \cdot T_{out}^c}$$

The same applies to the total pressure at the output:

$$Ptot_{out}^h = P_{out}^h + \frac{\left(\rho_{out}^h \cdot \left(v_{out}^h\right)^2\right)}{2}$$

$$Ptot_{out}^c = P_{out}^c + \frac{\left(\rho_{out}^c \cdot (v_{out}^c)^2\right)}{2}$$

Once convergence is achieved, it is assumed that the mass is conserved so that the output values of cell (1.1) now become the input values of cell (1.2), the adjacent cell. Specifically,

$$\dot{m}_h(1,2) = \dot{m}_h(1,1)$$

$$Ptot_{in}^h(1,2) = Ptot_{out}^h(1,1)$$

$$T_{in}^h(1,2) = T_{out}^h(1,1)$$

$$T_{w(1,2)} = \frac{T_{in}^{h(1,1)} + T_{in}^{c(1,1)}}{2}$$

Similarly for the cold side:

$$\dot{m}_c(1,2) = \dot{m}_c(1,1)$$

$$Ptot_{in}^c(1,2) = Ptot_{out}^c(1,1)$$

$$T_{in}^c(1,2) = T_{out}^c(1,1).$$

Once the first row is completely solved then the method moves on to the second and subsequent rows until completing the layer.

The process repeats for other layers if no homogeneous conditions are at the inlet of the heat exchanger (1) and at the end the mass flow averages are taken for outlet temperature and pressure of full heat exchanger.

It has been checked that the method, only requires CFD simulations for building the interpolation modules (IM1, IM2) wherein in this case about 500 simulations have been used. This is only a small amount of computation compared to the huge amount of cpu resources deeded for a full simulation of the entire heat exchanger (1) in view of the small size of the element volume (EM) represented in figure 1. This method has been checked to be very accurate even while consuming a minimal amount of computational resources.

**Claims**

1. Computer-Implemented method for the numerical simulation of a heat exchanger (1), wherein:

   - the heat exchanger (1) is configured to exchange heat between a first fluid ($f_h$) and a second fluid ($f_c$), the first fluid ($f_h$) being a hot fluid and the second fluid ($f_c$) being a cold fluid;
   - the heat exchanger (1) comprising a first input port (1.1) and a first output port (1.2) for the first fluid ($f_h$) and, a second input port (1.3) and a second output port (1.4) for the second fluid ($f_c$);
   - the heat exchanger (1) comprising an heat exchange volume (1.5) comprising heat exchanging walls (1.6) separating the first fluid ($f_h$) and the second fluid ($f_c$) and for exchanging heat between the two fluids ($f_h$, $f_c$);

   where the whole behavior of the heat exchanger (1) is simulated according to the following steps:

   - generating a numerical model according to the following steps:
   - discretizing the heat exchange volume (1.5) in elemental volumes (EV), wherein each elemental volume (EV) comprises:

      a first inlet boundary region (EVIh) and a first outlet boundary region (EVOh) for the first fluid ($f_h$);
      a second inlet boundary region (EVIc) and a second outlet boundary region (EVOc) for the second fluid ($f_c$);
      at least a portion (1.6.1) of the heat exchanging wall (1.6) separating the first fluid ($f_h$) and the second fluid ($f_c$);

         wherein the portion (1.6.1) of the heat exchanging wall (1.6) and the inlet and outlet boundary regions (EVIh, EVOh, EVIc, EVOc) of all elemental volumes (EV) have the same configuration and shape;
         wherein the discretization is such that the union of elemental volumes (EV) is the heat exchange volume (1.5) and the union of portions (1.6.1) of the heat exchanging wall (1.6) is the heat exchanging wall (1.6) of the heat exchanger (1);

   - allocating a data structure for storing fluid parameters and thermal properties of the heat exchanging wall (1.6), for storing at least, at each elemental volume (EV), fluid values for the first fluid ($f_h$) and for the second fluid ($f_c$);
   - populating fluid values corresponding to boundary conditions of the heat exchanger on those inlet/outlet regions of the elemental volumes (EV) located at the boundaries of the heat exchange volume (1.5);
   - instantiating an estimation module for providing the fluid values at the outlet regions (EVOh, EVOc) of an elemental volume (EV) when inputting fluid values at the inlet regions (EVIh, EVIc) by estimating the results of a numerical simulation of the reference elemental volume (EV);
   - iterating over all the elemental volumes (EV) having available values at the inlet regions, at each iteration updating the values at the outlet regions by using the estimation module, iterating until a predetermined norm evaluated over the increments of updated values is below a predetermined threshold value;
   - returning at least one fluid value of the allocated data structure storing the elemental volumes as the result of the previous iterative step.

2. A method according to claim 1, wherein generating a numerical model comprises generating:

   a first reference volume model (rf1), the first reference volume model (rf1) comprising boundary regions of the first fluid ($f_h$) and a portion of a heat exchanging wall (1.6.1) for separating a first fluid ($f_h$) and a second fluid ($f_c$), and

a second reference volume model (rf2), the second reference volume model (rf2) comprising boundary regions of the second fluid ($f_c$) and the same portion of a heat exchanging wall (1.6.1) for separating a first fluid ($f_h$) and a second fluid ($f_c$),
wherein

the boundary regions of the first reference volume model (rf1) and the portion of the heat exchanging wall (1.6.1) of the first reference volume model (rf1) have the shape of the volume housing the first fluid ($f_h$) and the portion of the heat exchanging wall (1.6.1) of any of the elemental volumes (EV) and,
the boundary regions of the second reference volume model (rf2) and the portion of the heat exchanging wall (1.6.1) of the second reference volume model (rf2) have the shape of the volume housing the second fluid ($f_c$) and the portion of the heat exchanging wall (1.6.1) of any of the elemental volumes (EV);

- sampling a predetermined first multidimensional-domain for fluid variables for the first fluid ($f_h$) at the inlet boundaries of the first reference volume model (rf1) and for heat exchanging wall temperature ($T_w$) and, sampling a predetermined second multidimensional-domain for fluid variables for the second fluid ($f_c$) at the inlet boundaries of a second reference volume model (rf2) and for heat exchanging wall temperature ($T_w$);
- for each sampled point of the first multidimensional-domain carrying out a numerical fluid simulation of the first reference volume model (rf1) determining the values of the fluid variables of the first fluid ($f_h$) at the outlet boundaries (EVOh) responsive to the inlet fluid values at the inlet boundaries (EVIh); and,
for each sampled point of the second multidimensional-domain carrying out a numerical fluid simulation of the second reference volume model (rf2) determining the values of the fluid variables of the second fluid ($f_c$) at the outlet boundaries (EVOc) responsive to the inlet fluid values at the inlet boundaries (EVIc);
- instantiating a first interpolation module (IM1) for providing the fluid values at the outlet region (EVOh) when inputting fluid values at the inlet region (EVIh) of the first reference volume model (rf1) by interpolating the results of the simulations of the first reference elemental volume model (rf1); and, instantiating a second interpolation module (IM2) for providing the fluid values at the outlet region (EVOc) when inputting fluid values at the inlet region (EVIc) of the second reference volume model (rf2) by interpolating the results of the simulations of the second reference elemental volume model (rf2).

3. A method according to claim 2, wherein iterating on an elemental volume (EV), each iteration comprises the following steps:

- predetermining an initial value of the temperature ($T_w$) of the portion (1.6.1) of the heat exchanging wall (1.6) of the elemental volume (EV), said value preferably selected between the temperature at the inlet region of the first fluid ($f_h$) and the temperature at the inlet region of the second fluid ($f_c$);
- determining $Q_h$, the heat transferred from the first fluid ($f_h$) to the portion (1.6.1) of the heat exchanging wall (1.6);
- determining $Q_c$, the heat transferred from the portion (1.6.1) of the heat exchanging wall (1.6) to the second fluid ($f_c$);
- updating the value of the temperature ($T_w$) of the portion (1.6.1) of the heat exchanging wall (1.6) responsive to the difference $Q_h - Q_c$.

4. A method according to claim 3, wherein the initial value of the temperature ($T_w$) of the portion (1.6.1) of the heat exchanging wall (1.6) of the elemental volume (EV) is $1/2(T_{in}^h + T_{in}^c)$, wherein $T_{in}^h$ is the temperature of the first fluid ($f_h$) at the inlet boundary region (EVIh) and $T_{in}^c$ is the temperature of the second fluid ($f_c$) at the inlet boundary region (EVIc).

5. A method according to any of claims 3 to 4, wherein

- $Q_h = \dot{m}_h C_p^h (Ttot_{in}^h - Ttot_{out}^h)$ and $Q_c = \dot{m}_c C_p^c (Ttot_{out}^c - Ttot_{in}^c)$, being
- $\dot{m}_h$ and $\dot{m}_c$ the mass flow of the first fluid ($f_h$) and the second fluid ($f_c$) respectively;

- $C_p^h$ and $C_p^c$ the heat capacity at constant pressure of the first fluid ($f_h$) and the second fluid ($f_c$) respectively; and,

- *Ttot* denotes the total temperature of the fluid wherein *h, c* indexes denotes the first fluid ($f_h$) and the second fluid ($f_c$) respectively and *in, out* denotes at the inlet boundary region and the outlet boundary region respectively.

6. A method according to any of claims 3 to 5, wherein if $Q_h > Q_c$ the value of the temperature ($T_w$) of the portion (1.6.1) of the heat exchanging wall (1.6) is updated incrementing a value e and, if $Q_h < Q_c$ the value of the temperature ($T_w$) of the portion (1.6.1) of the heat exchanging wall (1.6) is updated decrementing said value e, wherein e is the ratio between the heat transfer according to the values of the current iteration and, the maximum heat transfer; said ratio being preferably estimated as:

$$e = \dot{m}_h C_p^h (Ttot_{in}^h - Ttot_{out}^h)/C_{min}(Ttot_{in}^h - Ttot_{out}^c)$$

wherein $C_{min} = min(\dot{m}_h C_p^h, \dot{m}_c C_p^c)$ .

7. A method according to any of previous claims, wherein the inlet conditions at the inlet port (1.1) at least for the first fluid ($f_h$) is homogeneous wherein the iteration over the elemental volumes (EV) are extended over a layer of elemental volumes (EV) and, the fluid and thermal properties propagated to the rest of the heat exchange volume (1.5).

8. A method according to any of previous claims, wherein a set of elemental volumes (EV) are shifted in such a way that:

   - the portion (1.6.1) of the heat exchanging wall (1.6) of each shifted elemental volume (EV) is the former boundary of two adjacent elemental volumes (EV);
   - the region of the shifted elemental volume (EV) housing the first fluid ($f_h$) and the region of the shifted elemental volume (EV) housing the second fluid ($f_c$) are those regions being adjacent and housed in the two adjacent non-shifted elemental volumes (EV).

9. A method according to previous claim, wherein the iterative method is also executed over the shifted elemental volumes (EV).

10. A computer program product comprising instructions which, when the program is executed by a computer, cause the computer to carry out the steps of the method according to any of previous claims.

EP 4 451 165 A1

1

1.4

1.2

1.1

$f_h$

1.3

$f_c$

EV

FIG. 1

FIG. 2

EP 4 451 165 A1

$f_c$

| (1,1) → | (1,2) | (1,3) | | | (1,n) |
|---|---|---|---|---|---|
| (2,1) → | | | | | |
| (3,1) → | | | | | |
| → | | | (i,j) | | |
| → | | | | | |
| (m,1) → | (m,2) | | (m,j) | | (m,n) |

$f_h$ →

FIG. 3

Europäisches
Patentamt

European
Patent Office

Office européen
des brevets

# EUROPEAN SEARCH REPORT

Application Number

EP 23 38 2370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROETZEL W ET AL: "Thermal design of multi-fluid mixed-mixed cross-flow heat exchangers", HEAT AND MASS TRANSFER ; WÄRMEUND STOFFÜBERTRAGUNG, SPRINGER, BERLIN, DE, vol. 46, no. 10, 26 September 2010 (2010-09-26), pages 1077-1085, XP019858282, ISSN: 1432-1181, DOI: 10.1007/S00231-010-0682-7 * abstract * * sections 2.1, 2.2, 3.1, 3.2.2 * * figures 2, 3 * * the whole document * ----- | 1-10 | INV. G06F30/20 ADD. G06F111/10 G06F113/14 G06F119/08 |
| X | RANGANAYAKULU C. ET AL: "The combined effects of inlet fluid flow and temperature nonuniformity in cross flow plate-fin compact heat exchanger using finite element method", HEAT AND MASS TRANSFER, vol. 32, no. 5, 13 June 1997 (1997-06-13), pages 375-383, XP093083237, Berlin/Heidelberg ISSN: 0947-7411, DOI: 10.1007/s002310050134 Retrieved from the Internet: URL:https://link.springer.com/content/pdf/ 10.1007/s002310050134.pdf?pdf=button> [retrieved on 2023-09-19] * abstract * * figures 1a-1d * * section 2 * * the whole document * ----- | 1-10 | |
| | | | **TECHNICAL FIELDS SEARCHED (IPC)** |
| | | | G06F |

-/--

The present search report has been drawn up for all claims

| Place of search | Date of completion of the search | Examiner |
|---|---|---|
| Munich | 19 September 2023 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

**Application Number**

EP 23 38 2370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIXIT TISHA ET AL: "Two-stream cross flow heat exchangers in thermal communication with the surroundings - A generalized anal", INTERNATIONAL JOURNAL OF HEAT AND MASS TRANSFER, ELSEVIER, AMSTERDAM, NL, vol. 66, 23 July 2013 (2013-07-23), pages 1-9, XP028720719, ISSN: 0017-9310, DOI: 10.1016/J.IJHEATMASSTRANSFER.2013.06.077 * abstract * * figures 1a, 1b * * sections 2-2.3 * * the whole document * ----- | 1-10 | |

|  |  |  | TECHNICAL FIELDS SEARCHED (IPC) |

The present search report has been drawn up for all claims

| Place of search | Date of completion of the search | Examiner |
|---|---|---|
| Munich | 19 September 2023 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)